# EUROPEAN PATENT APPLICATION

(11) **EP 0 867 895 A2**
(43) Date of publication of application: **30.09.1998**
(21) Application number: 98302319.3
(22) Date of filing: 26.03.1998
(51) Int. Cl.: H01C 7/02, H01C 7/13

(54) **Current limiter and/or circuit breaker with PTC element**

(30) Priority: 27.03.1997 JP 76233/97; 28.03.1997 JP 78384/97; 23.03.1998 JP 74635/98
(71) Applicant: NGK INSULATORS, LTD., Nagoya City Aichi Pref. (JP)
(72) Inventor: Ohashi, Takashi, Nagoya City, Aichi Pref. (JP); Ohata, Yasuaki, Nagoya City, Aichi Pref. (JP); Mizuno, Yukio, Nagoya City, Aichi Pref. (JP); Yokoi, Seigo, Nagoya City, Aichi Pref. (JP)
(74) Representative: Paget, Hugh Charles Edward

(57) **Abstract**

A current limiter composed of a PTC element the resistance of which is abruptly increased by rise of temperature above a resistance transition temperature and a pair of electrode plates secured to opposite surfaces of the PTC element, wherein the PTC element is formed thinner at its outer peripheral portion than at its central portion so that the specific resistance of the central portion becomes smaller than that of the outer peripheral portion.

## Description

The present invention relates to a current limiter and/or a circuit breaker for protecting an electric power system from a short-circuit current or an overcurrent applied thereto, and more particularly to a current limiter and/or a circuit breaker equipped with a PTC element the resistance of which is abruptly increased in response to rise of temperature above a resistance transition temperature.

For protection of an electric power system in the event of a short-circuit, there has been proposed a current limiter equipped with a thermistor of positive temperature coefficient or PTC element in the form of a rectangular or circular plate with a predetermined thickness for connection to a power transport line of the electric power system. In use of the current limiter with a circuit breaker in the electric power system, the temperature of the PTC element is raised by joule heat in the event of a short-circuit of the power transport line. When the temperature of the PTC element rises above a resistance transition temperature or phase transition temperature, the resistance of the PTC element is abruptly increased to limit an overcurrent flowing through the power transport line, and the circuit-breaker is operated to interrupt the overcurrent. When the PTC element is cooled by recovery of the power transport line, the temperature of the PTC element drops below the resistance transition temperature, resulting in decrease of the resistance of the PTC element. Thus, the PTC element is automatically recovered to permit the flow of rated current through the power transport line when the circuit breaker is closed.

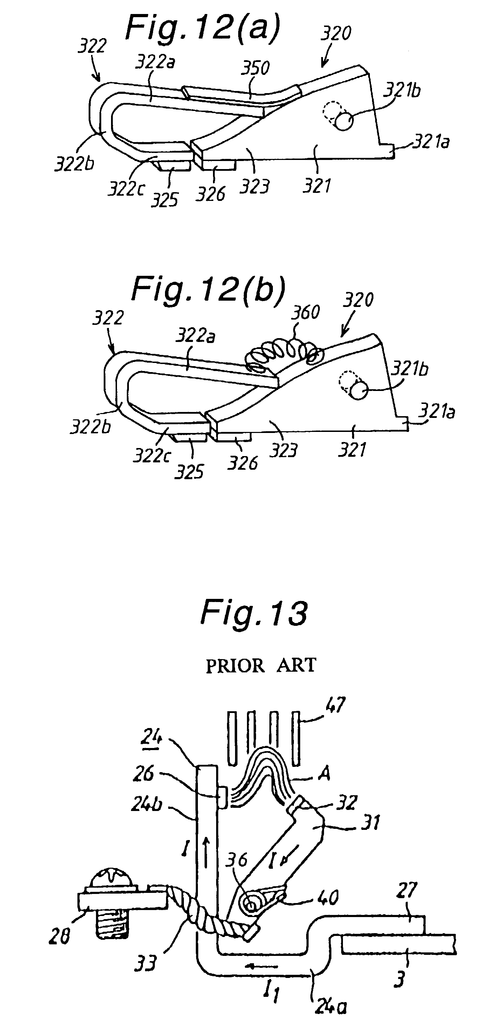

Disclosed in Japanese Patent Laid-open Publication No. 3 (1991)-102724 is a circuit breaker of the type which includes a movable contact 32 normally maintained in contact with a fixed contact 26 under the load of a spring 40 as shown in Fig. 13. In the circuit breaker, the fixed contact 26 is secured to a stationary conductive member 24 having a base portion 24a, a vertical support portion 24b perpendicular to the base portion 24a for support of the fixed contact 26 and a connecting portion 27 fixed to a terminal plate 3 (not shown). The movable contact 32 is secured to a distal end of a movable arm 31 that is pivoted on a support pin 36 and biased by the spring 40 toward the support portion 24b of conductive member 24. A shunt 33 is connected at its one end to the movable arm 31 and at its other end to a terminal plate 28. Arranged above the contacts 26 and 32 is an arc extinction grid 47.

When the circuit breaker is applied with an overcurrent in the event of a short circuit, an electromagnetic repulsion force is generated between the contacts 32 and 26 or between the movable arm 31 and the support portion 24b of conductive member 24 to disengage the movable contact 32 from the fixed contact 26. This causes arc A between the contacts 26 and 32. In such an instance, the arc A is attracted toward the arc extinction grid 47 due to a current I₁ flowing through the base portion 24a of conductive member 24 in an opposite direction relative to the arc A and is cooled by the arc extinction grid 47 to increase the arc voltage. As a result, the increased arc voltage acts as a high resistance on the power transport line to limit the overcurrent.

As in the current limiter, the radiation speed at the outer peripheral portion of the PTC element is higher than that at the central portion of the PTC element, the rising speed of temperature at the central portion of the PTC element becomes higher than that at the outer peripheral portion of the PTC element. As a result, in the event of a short circuit, the temperature at the central portion of the PTC element is raised above the resistance transition temperature prior to rise of the temperature at the outer peripheral portion of the PTC element. Due to such a difference in rise of the temperature at the central and outer peripheral portions, the resistance of the PTC element may not be uniformly increased to a predetermined value, resulting in an error in operation of the current limiter. In use of a PTC element of high resistance transition temperature, the difference in rise of the temperature at the central and outer peripheral portions is increased. This causes excessive thermal stress between the central and outer peripheral portions of the PTC element, resulting in damage of the PTC element.

Assuming that the circuit breaker has been connected in series to the current limiter to avoid damage of the power transport line caused by an overcurrent in the event of a short circuit, the resistivity of the PTC element in the current limiter causes loss of the electric power in a normal condition of the electric power system. In the conventional circuit breaker described above, the arc extinction grid is constructed in a large size to rapidly cool the arc for increase of the arc voltage. For this reason, the circuit breaker becomes large in size. In the case that SF6 gas is used for rapid recovery of insulating proof stress of the circuit breaker, the movement speed of the arc is delayed, resulting in deterioration of the current limit function.

It is, therefore, a primary object of the present invention to provide a current limiter with a PTC element the resistance of which is uniformly increased at the same time in response to rise of temperature.

A secondary object of the present invention is to provide a current limiter with a PTC element capable of limiting an overcurrent applied thereto without loss of an electric power.

A tertiary object of the present invention is to provide a circuit breaker in combination with a current limiter with a PTC element superior in current limiting function in a compact size.

According to the present invention, there is provided a current limiter composed of a PTC element the resistance of which is abruptly increased by rise of temperature above a resistance transition temperature and a pair of electrode plates secured to opposite surfaces of the PTC element, wherein the PTC element is formed in a structure in which density of an overcurrent flowing across an outer peripheral portion thereof becomes larger than that of the overcurrent flowing across a central portion thereof.

In a practical embodiment of the present invention, the PTC element is formed thinner at its outer peripheral portion than at its central portion. The PTC element may be thickened from its outer peripheral portion toward its central portion. Alternatively, the PTC element may be formed in a structure in which the resistivity at its c entral portion becomes larger than that at its outer peripheral portion. The PTC element may be formed in a structure in which the contact area with one of said electrode plates becomes smaller at its central portion than at its outer peripheral portion.

According another aspect of the present invention, there is provided a current limiter composed of a PTC element the resistance of which is abruptly increased by rise of temperature above a resistance transition temperature and a pair of electrode plates secured to opposite surfaces of the PTC element, wherein a normally closed switch is connected in parallel with said PTC element to be rapidly opened when applied with an overcurrent. In the current limiter, the normally closed switch is opened by an electromagnetic repulsion force caused by an overcurrent applied thereto, while the PTC element is applied with joule heat caused by the overcurrent so that the resistance of the PTC element is abruptly increased to limit the overcurrent.

According to a further aspect of the present invention, there is provided a circuit breaker in combination with a current limiter provided with a PTC element the resistance of which is abruptly increased by rise of temperature above a resistance transition temperature to limit a short-circuit current in the event of a short-circuit, wherein the circuit breaker comprises a first normally closed switch connected in parallel with the PTC element to be rapidly opened when applied with the short circuit-current and a second normally closed switch associated with the PTC element to be opened when the short-circuit is detected. In the circuit breaker, the first normally closed switch is opened by an electromagnetic repulsion force caused by the short-circuit current applied thereto, while the second normally closed switch is opened when the resistance of the PTC element is abruptly increased by rise of temperature above the resistance transition temperature to limit the short-circuit current.

According to an aspect of the present invention, there is provided a circuit breaker in combination with a current limiter provided with a PTC element the resistance of which is abruptly increased by rise of temperature above a resistance transition temperature to limit a short-circuit current in the event of a short circuit in an electric power system, wherein the circuit breaker comprises a fixed arm mounted on a stationary structure, a movable arm mounted on a switching mechanism and placed to be opposed to said fixed arm in a normal condition of the electric power system and to be moved away from the fixed arm when the short-circuit is detected, first and second fixed contacts spaced in a predetermined distance and mounted on the fixed arm for connection to a source of electric power, the second fixed contact being associated with the PTC element, first and second movable contacts spaced in a predetermined distance and carried by the movable arm for connection to a load equipment, the first and second movable contacts being normally maintained in engagement with the first and second fixed contacts under the load of a resilient portion of the movable arm, and wherein the first movable contact is disengaged from the first fixed contact when applied with an electromagnetic repulsion force caused by the short-circuit current applied thereto, while the movable arm is moved away from the fixed arm by operation of the switching mechanism when the resistance of the PTC element is abruptly increased by rise of temperature above the resistance transition temperature to limit the short-circuit current.

In the circuit breaker, the load of the resilient portion of the movable arm is determined to be larger than a magnetic repulsion force caused by a normal current flowing across the first fixed and movable contacts so that the resilient portion of the movable arm is flexed by a magnetic repulsion force caused by the short-circuit current flowing across the first fixed and movable contacts in the event of the short-circuit. The electromagnetic repulsion force is caused by the current flowing through the fixed arm in an opposite direction relative to the current flowing through the movable arm.

By an abrupt increase of resistance with temperature rise is meant here an increase of resistance which is sufficiently rapid with temperature rise that the desired overcurrent limiting effect is achieved.

For a better understanding of the present invention, and to show how the same may be carried into effect, reference will now be made, by way of example, to the accompanying drawings, in which:-
Fig. 1 is a cross-sectional view of a first embodiment of a current limiter with a PTC element in accordance with the present invention;
Fig. 2 is a circuit diagram of an electric power system provided with the current limiter shown in Fig. 1;
Fig. 3 is a cross-section view of a second embodiment of a current limiter with a PTC element in accordance with the present invention;
Fig. 4(a) is a cross-sectional view of a third embodiment of a current limiter equipped with a PTC element in accordance with the present invention;
Fig. 4(b) is a graph showing a resistivity of the PTC element shown in Fig. 4(a);
Fig. 5 is a plan view of a PTC element adapted for use in a modification of the present invention;
Fig. 6 is a circuit diagram of an electric power system provided with a circuit breaker including a current limiter with the PTC element shown in Figs. 1 to 5;
Fig. 7 is a circuit diagram of another electric power system provided with a circuit breaker including the PTC element shown in Figs. 1 to 5;
Fig. 8 is a perspective view of component parts of the circuit breaker shown in Fig. 7;
Figs. 9(a) to 9(c) illustrate a mode of operation of the circuit breaker shown in Fig. 8;
Fig. 10 is a perspective view of component parts of a modification of the circuit breaker shown in Fig. 8;
Figs. 11(a) to 11(c) illustrate a mode of operation of the circuit breaker shown in Fig. 10;
Fig. 12(a) illustrates a modification of a movable arm of the circuit breaker shown in Fig. 8;
Fig. 12(b) illustrates another modification of the movable arm of the circuit breaker shown in Fig. 8; and
Fig. 13 is a front view of a conventional circuit breaker.

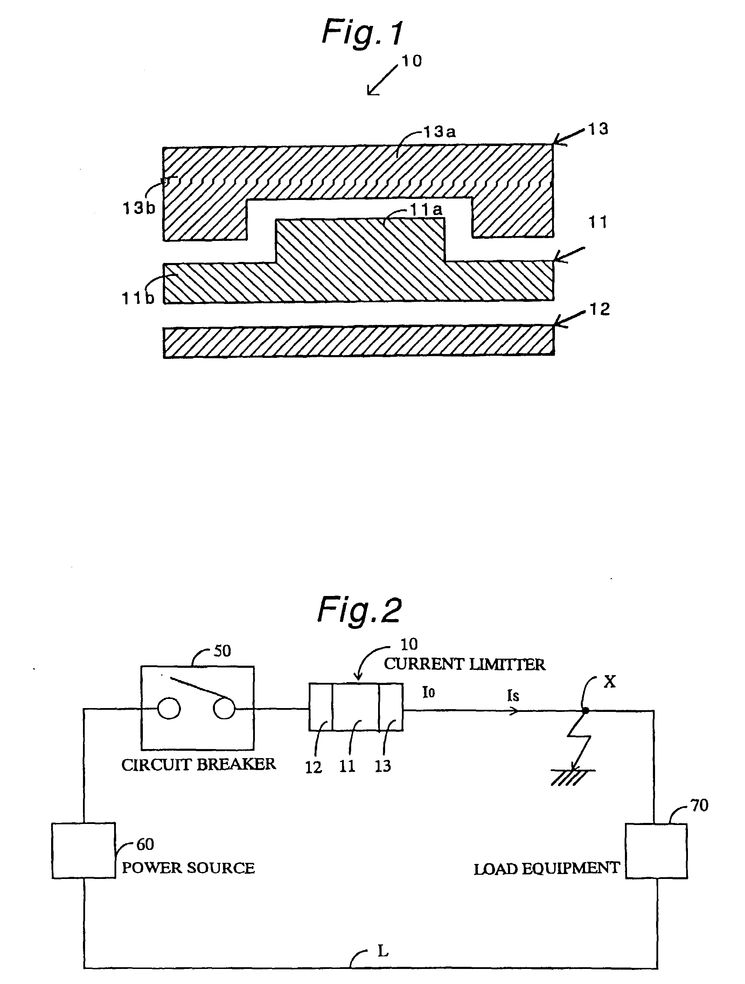

Referring now to the drawings, Fig. 1 schematically illustrates, in cross-section, a first embodiment of a current limiter 10 equipped with a PTC element 11 in accordance with the present invention. The current limiter 10 includes first and second electrode plates 12 and 13 secured in parallel to opposite surfaces of the PTC element 11. The PTC element 11 is in the form of a rectangular or circular plate with a predetermined thickness which is formed with a central thick portion 11a and an outer peripheral portion 11b thinner than the central thick portion 11a.

In this embodiment, the PTC element 11 is in the form of a thermistor of positive temperature coefficient formed of ceramic material or solid solution of V₂O₃-Cr₂O₃, BiTiO₃ or the like or compound ceramic material of cristobalite-carbon, the specific resistance of which is abruptly increased at a resistance transition temperature or phase transition temperature of about 200 °C to 280 °C. The electrode plates 12 and 13 each are made of metal such as copper, aluminum, stainless steel or the like and formed in a rectangular or circular shape. The first electrode plate 12 is secured to the bottom surface of PTC element 11 by means of conductive adhesive or welding. The second electrode plate 13 is formed at its center with a recessed portion 13a to be coupled with the central thick portion 11a of PTC element 11 and at its outer periphery with an annular thick portion 13b to be coupled with the outer peripheral portion 11b of PTC element 11. Similarly to the first electrode plate 12, the second electrode plate 13 is secured to the upper surface of PTC element 11 by means of conductive adhesive or welding.

Since in the current limiter 10, the specific resistance of the central thick portion 11a of PTC element 11 is determined to be larger than that of the outer peripheral portion 11b, the density of an overcurrent flowing across the outer peripheral portion 11b of PTC element 11 in the event of a short-circuit becomes larger than that of the overcurrent flowing across the central thick portion 11a of PTC element 11. As a result, the temperature of PTC element 11 is raised substantially at the same speed on the central and outer peripheral portions 11a and 11b. This implies that each temperature of the central and outer peripheral portions 11a and 11b rises above the resistance transition temperature at the same time in the event of the short-circuit.

Illustrated in Fig. 2 is a circuit diagram of an electric power system wherein the current limiter 10 with thc PTC element 11 is connected in series with a circuit breaker 50 on a power transport line L between an electric power source 60 and a load equipment 70. In a normal condition of the electric power system, a rated current Io from the power source 60 is supplied to the load equipment 70 through the circuit breaker 50 and current limiter 10 in a closed condition of the circuit breaker 50. Although in such an instance, the rated current flowing across the PTC element 11 becomes irregular in density at the central and outer peripheral portions 11a and 11b of PTC element 11, loss of the electric power is restrained in a small value since the resistance of PTC element 11 is maintained in a small value.

Assuming that a short-circuit has occurred at a point X of the power transport line L, the temperature of PTC element 11 is raised by joule heat caused by a short-circuit current Is flowing through the power transport line L. Upon rise of the temperature of PTC element above the resistance transition temperature, the resistance of PTC element 11 is abruptly increased to limit the short-circuit current Is. In this instance, the rising speed of temperature at the outer periphery portion 11b becomes equal to the rising speed of temperature at the central thick portion 11a. As a result, the PTC element 11 is uniformly heated at its central and outer peripheral portions 11a and 11b to the resistance transition temperature, and the short-circuit current is limited by rapid increase of the resistance of PTC element 11. This is effective to reduce thermal stress in the PTC element 11 for protecting the PTC element 11 from stress damage.

In the occurrence of the short-circuit at the point X of power transport line L, the circuit breaker 50 is opened in response to a detection signal applied from an overcurrent sensor (not shown) to interrupt the short-circuit current Is applied to the PTC element 11. When the circuit breaker 50 is closed after recovery of the power transport line L, the rated current Io is supplied to the load equipment 70 from the power source 60 through the power transport line L. In this instance, the PTC element 11 is gradually cooled, and in turn, the resistance of PTC element 11 is decreased to permit the supply of electric power to the load equipment 70 therethrough.

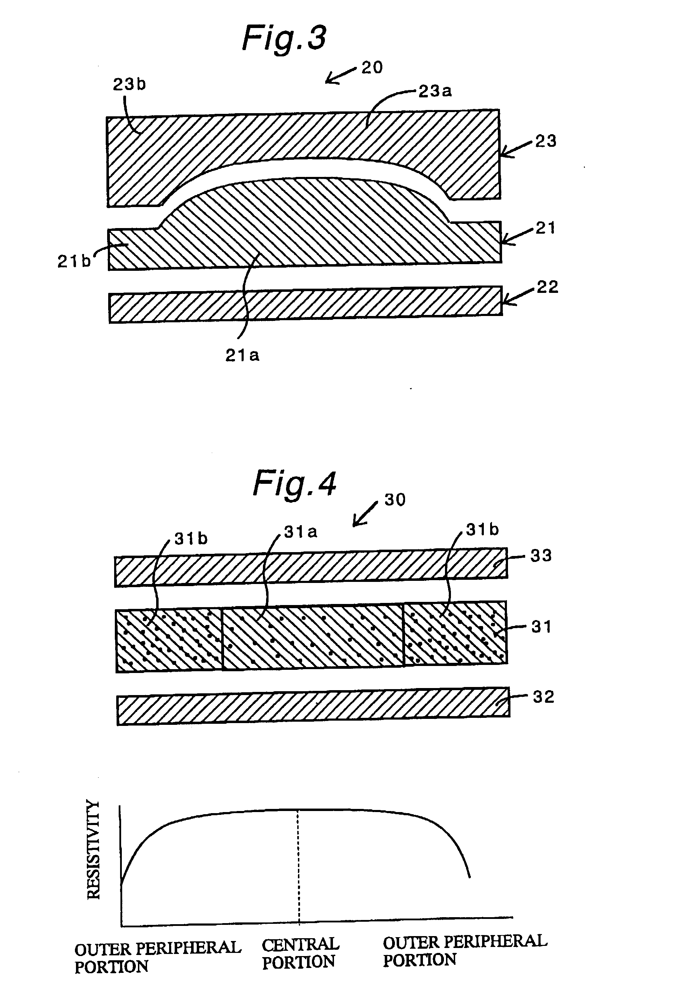

Illustrated in Fig. 3 is a second embodiment of the present invention, wherein a current limiter 20 includes a PTC element 21 in the form of a rectangular or circular plate with a predetermined thickness and first and second electrode plates 22 and 23 secured in parallel to opposite surfaces of the PTC element 21. The PTC element 21 is made of the same material as that of the PTC element 11 and formed with a central convex portion 21a and an annular portion 21b thinner than the convex portion 21a. The electrode plates 22 and 23 each are made of metal such as copper, aluminum, stainless steel or the like and formed in a rectangular or circular shape. The first electrode plate 22 is secured to the bottom surface of PTC element 21 by means of conductive adhesive or welding. The second electrode plate 22 is formed at its center with a concave portion 23a to be coupled with the central convex portion 21a of PTC element 21 and at its outer periphery with an annular thick portion 23b to be coupled with the annular portion 21b of PTC element 21. The second electrode plate 22 is secured to the upper surface of PTC element 21 by means of conductive adhesive or welding. Thus, the current limiter 20 is formed in a rectangular or circular body with a predetermined thickness.

As in the current limiter 20, the specific resistance of the central convex portion 21a of PTC element 21 is determined to be larger than that of the annular portion 21b, the density of an overcurrent flowing across the outer peripheral portion 21b of PTC element 21 in the event of a short-circuit becomes larger than that of the overcurrent flowing across the central convex portion 21a of PTC element 21. As a result, the temperature of PTC element 21 is raised substantially at the same speed at the central and outer peripheral portions 21a and 21b. This implies that each temperature of the central and outer peripheral portions 21a and 21b rises above the resistance transition temperature at the same time in the event of the short-circuit. This is effective to reduce thermal stress in the PTC element 21 for protecting the PTC element 21 from stress damage. Although in the current limiter 20, the PTC element 21 was formed with the annular portion 21b in surrounding relationship with the central convex portion 21a, the annular portion 21b may be eliminated in actual practices of the present invention.

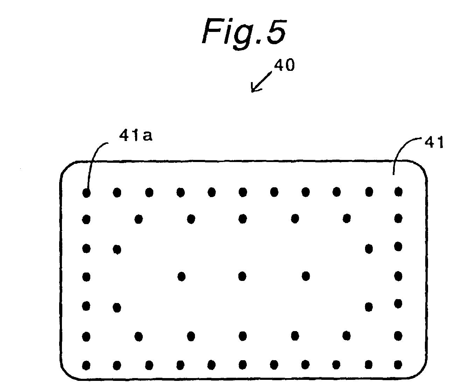

Fig. 4(a) illustrates a third embodiment of the present invention, wherein a current limiter 30 includes a PTC element 31 in the form of a rectangular or circular plate with a predetermined thickness and first and second electrode plates 32 and 33 secured to opposite surfaces of the PTC element 31 by means of conductive adhesive or welding. The PTC element 31 is composed of different materials at its central and outer peripheral portions 31a and 31b. The materials of PTC element 31 are selected in such a manner that the resistivity of the PTC element 31 is gradually decreased toward the outer peripheral portion 31b from the central portion 31a as shown in Fig. 4(b). Alternatively, the PTC element 31 may be composed of the same material at its central and outer peripheral portions 31a and 31b, wherein the density of the material is adjusted at the central and outer peripheral portions 31a and 31b in such a manner that the resistivity of the PTC element 31 is gradually decreased toward the outer peripheral portion 31b from the central portion 31a. The electrode plates 32 and 33 each are made of the same material as in the current limiter shown in Fig. 1 and formed in a rectangular or circular shape.

As in the current limiter 30, the specific resistance of the central portion 31a of PTC element 31 is determined to be larger than that of the outer peripheral portion 31b, the density of an overcurrent flowing across the outer peripheral portion 31b of PTC element 31 becomes larger than that of the overcurrent flowing across the central portion 31a of PTC element 31. As a result, the temperature of PTC element 31 is raised substantially at the same speed at the central and outer peripheral portions 31a and 31b. This implies that each temperature of the central and outer peripheral portions 31a and 31b rises above the resistance transition temperature at the same time in the event of a short-circuit.

The PTC element 31 of the current limiter 30 may be modified in the form of a PTC element 41 shown in Fig. 5. The PTC element 41 is in the form of a rectangular or circular plate with a predetermined thickness and is formed thereon with a plurality of spaced projections 41a which are arranged in such a manner that the distribution density of projections 41a is increased toward an outer peripheral portion of PTC element 41 from a central portion of the same. The PTC element 41 is assembled in the same manner as in the current limiter 31 shown in Fig. 4(a).

As the specific resistance of PTC element 41 is determined to be larger at its central portion than that at its outer peripheral portion, the density of an overcurrent flowing across the outer peripheral portion of PTC element 41 becomes larger than that of the overcurrent flowing across the central portion of PTC element 41. As a result, the temperature of PTC element 41 is raised substantially at the same speed at the central and outer peripheral portions of PTC element 41. This implies that each temperature at the central and outer peripheral portions of PTC element 41 rises above the resistance transition temperature at the same time in the event of a short-circuit. This is effective to enhance current limiting function of the PTC element 41 and to reduce thermal stress in the PTC element 41 for protecting the PTC element 41 from stress damage.

Although in the PTC element 41, the projections 41a have been arranged in such a manner that the distribution density of the projections 41a is increased toward the outer peripheral portion of PTC element 41 from the central portion of the same, the projections 41a may be replaced with a plurality of spaced parallel line segments or strips formed on either one of the electrode plate. In such a modification, the parallel line segments are arranged on the electrode plate in such a manner that the distribution density of the line segments is increased toward the outer peripheral portion of the PTC element 41 from the central portion of the same. Alternatively, the parallel strips are adjusted in width in such a manner that the contact area of the strips with the PTC element is increased toward the outer peripheral portion of the PTC element from the central portion of the same.

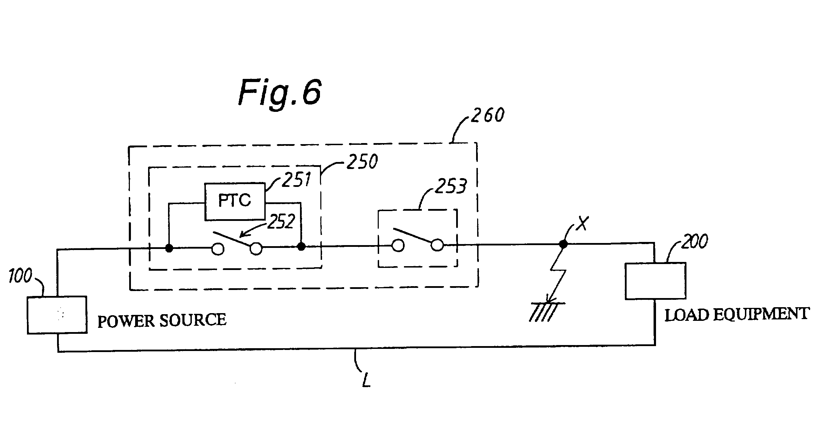

In Fig. 6, there is schematically illustrated an electric power system wherein a circuit breaker 260 is provided on a power transport line L between an electric power source 100 and a load equipment 200. The circuit breaker 260 includes a current limiter 250 equipped with a PTC element 251 in the form of either one of the foregoing PTC elements 11 to 41, a first breaker 252 connected in parallel with the PTC element 251 and a second breaker 253 connected in series with the first breaker 252. The first breaker 252 has a movable contact normally maintained in engagement with a fixed contact to be disengaged therefrom when applied with an electromagnetic repulsion forced caused by an overcurrent applied thereto. The second breaker 253 has a movable contact normally maintained in engagement with a fixed contact to be disengaged therefrom when applied with a detection signal from an overcurrent detection device (not shown).

Assuming that the first and second breakers 252 and 253 each are maintained in a normally closed condition, an electric power is supplied to the load equipment 200 from the power source 100 through the breakers 252 and 253. In this instance, the PTC element 251 does not cause any loss of the electric power. In the event of a short-circuit at a point X on the power transport line L, an electromagnetic repulsion force is caused by a short-circuit current between the contacts of breaker 252 to disengage the movable contact of breaker 252 from the fixed contact. In turn, the PTC element 251 is applied with joule heat caused by the short-circuit current, and the resistance of PTC element 251 is abruptly increased to limit the short-circuit current when the temperature of PTC element 251 is raised above the resistance transition temperature. Simultaneously, the second breaker 253 is opened in response to a detection signal applied from the overcurrent detection device (not shown) to interrupt the flow of the short-circuit current applied to the load equipment 200 thereby to restrain risc of the temperature of PTC element 252. This is effective to protect the PTC element 251 from stress damage caused by the short-circuit current.

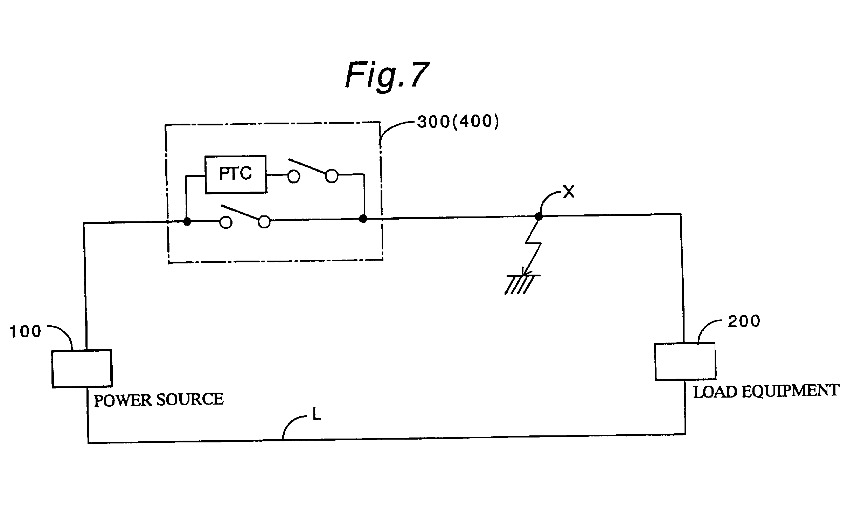

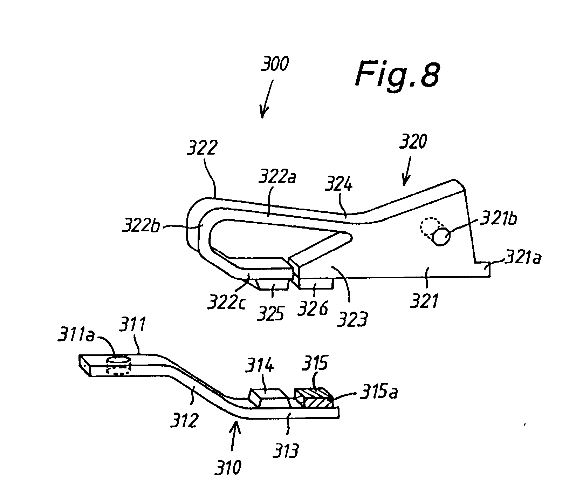

In Fig. 7, there is schematically illustrated another electric power system wherein a circuit breaker 300 with a PTC element 315a is provided on a power transport line L between the power source 100 and the load equipment 200. As illustrated in Fig. 8, the circuit breaker 300 includes a fixed arm 310, a movable arm 320 and a switching mechanism 340 for closing and opening the movable arm 320. The fixed arm 310 has a base portion 311 mounted on a stationary structure (not shown) at its mounting hole 311a for connection to the power source 100, an inclined leg portion 312 and a horizontal support portion 313. In the fixed arm 310, first and second fixed contacts 314 and 315 are fixedly mounted on the horizontal support portion 313 at positions spaced in a predetermined distance, and the PTC element 315a is secured to the second fixed contact 315. In a practical embodiment, it is desirable that the specific resistance of PTC element 315a is abruptly increased at 80 °C to 200 °C. It is, therefore, preferable that the PTC element 315a is formed of ceramic material or solid solution composed of BaTiO₃, V₂O₃, V₂O₃-Cr₂O₃, PbTiO₃ or BiTiO₃. In addition, the PTC element 315a may be formed of compound material composed of polyethylene-carbon or polyolefine-carbon, and the second fixed contact 315 may be provided in the form of the PTC element 315a.

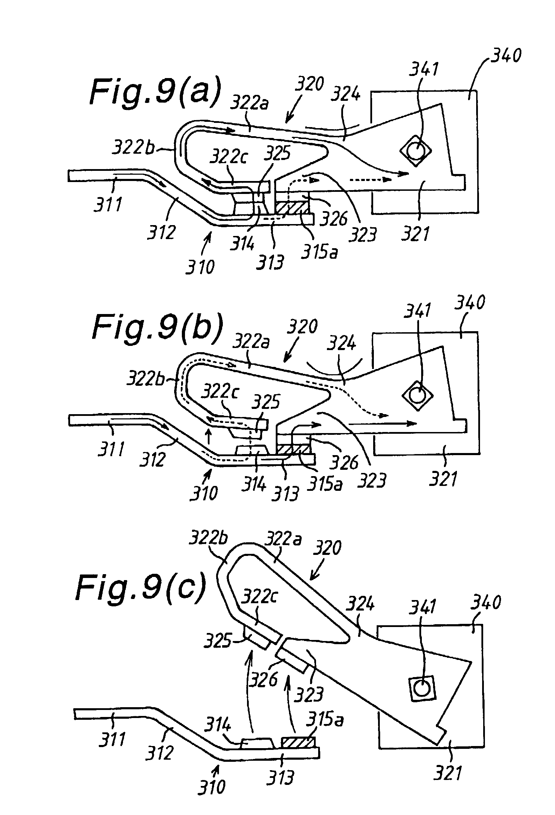

The movable arm 320 has a terminal 321a for connection to the load equipment 200, a body portion 321 mounted at its mounting hole 321a on a rotary shaft 341 of the switching mechanism 340 for rotation therewith as shown in Fig. 9(a), a first arm portion 322 extending slightly upward from the body portion 321 and a second arm portion 323 extending horizontally from the body portion 321. A bifurcated portion 324 between the arm portions 322 and 323 is formed of resilient copper or stainless steel to be flexed when applied with an electromagnetic repulsion force caused by an overcurrent. The first arm portion 322 has an upper section extending slightly upward from the bifurcated portion 324, a curved section 322b and a lower horizontal support section 322c opposed to the second arm portion 323. In the movable arm 320, a first movable contact 325 is secured to the bottom surface of horizontal support section 322c, and a second movable contact 326 is secured to the bottom surface of second arm portion 323.

The switching mechanism 340 is in the form of a conventional molded case circuit breaker which is constructed to normally bias the movable arm 320 toward the fixed arm 310 for maintaining the movable contacts 325 and 326 in engagement with the fixed contacts 314 and 315 in a normal condition of the electric power system and to move the movable arm 320 upward when applied with a detection signal from an overcurrent detection device provided therein.

During the assembly process of the circuit breaker 300, the fixed arm 310 is mounted on the stationary structure (not shown) and arranged below the movable arm 320 mounted on the switching mechanism 340. The fixed arm 311 is connected at its mounting hole 311a to one end of the power transport line L located at one side of the power source 100, while the movable arm 320 is connected at its terminal 321a to the other end of the power transport line L located at one side of the load equipment 200. Thereafter, the movable arm 320 is moved toward the fixed arm 310 by operation of the switching mechanism 340 and is retained in position to maintain the movable contacts 325 and 326 in engagement with the fixed contacts 314 and 315.

When the rated current is supplied from the power source 100 to the load equipment 200 in a normal condition of the system, the current flows through a first current path formed by the fixed contact 314 and the movable contact 325, first arm portion 322, body portion 321 and terminal 321a of movable arm 320 as shown by a solid arrow in Fig. 9(a). In this instance, the current flows in an opposite direction at the horizontal support portion 313 of fixed arm 311 and the horizontal support section 322c of movable arm 320. This causes an electromagnetic repulsion force between the horizontal support portion 313 of fixed arm 311 and the horizontal support section 322c of movable arm 320. The electromagnetic repulsion force caused by the current is, however, maintained in a smaller value than the resilient force of bifurcated portion 324 of movable arm 320. Thus, the first movable contact 325 of movable arm 320 is maintained in engagement with the first fixed contact 314 of fixed arm. 311. On the other hand, the current flows through a second current path formed by the PTC element 315, fixed contact 315, the movable contact 326 and body portion 321 of movable arm 320 as shown by a dotted arrow in Fig. 9(a) and is restricted by the resistance of PTC element 315a so that the current is supplied to the load equipment 200 mainly through the first current path.

In the occurrence of a short-circuit at a point X shown in Fig. 7, a short-circuit current causes the electromagnetic repulsion force between the horizontal support portion 313 of fixed arm 311 and the horizontal support section 322c of movable arm 320 to increase larger than the resilient force of bifurcated portion 324 of movable arm 320, and in turn, the movable arm 320 is moved by the electromagnetic repulsion force to disengage the movable contact 325 from the fixed contact 314 as shown in Fig. 9(b). Upon disengagement of the movable contact 325 from the fixed contact 314, the resistance between the contacts 314 and 325 increases to occur arc between the contacts 314 and 325. Thus, the short-circuit current flows through the second current path as shown by a solid arrow in Fig. 9(b), and the PTC element 315a is applied with joule heat caused by the short-circuit current. When the temperature of PTC element 315a is raised above 130 °C, the specific resistance of PTC element 315a is abruptly increased to limit the short-circuit current, and the arc between contacts 314 and 325 is eliminated. In such an instance, the short-circuit current is detected by the overcurrent detection device, and the switching mechanism 340 is operated in response to a detection signal applied from the overcurrent detection device to move the movable arm 320 upward as shown in Fig. 9(c). As a result, the movable contact 326 is disengaged from the fixed contact 315 to interrupt the short-circuit current applied to the load equipment 200. This is useful to restrain the temperature rise of PTC element 315a.

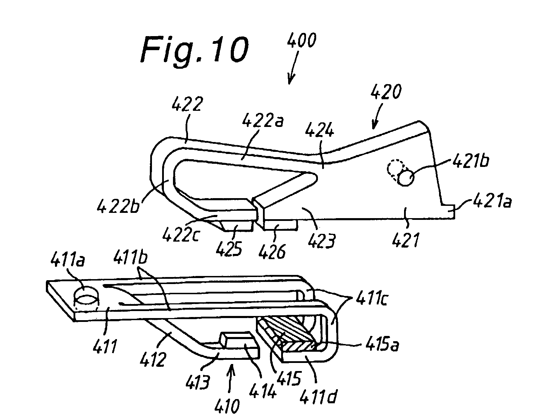

In Fig. 10, there is illustrated a modification of the circuit breaker 300 shown in Fig. 8. The modified circuit breaker is composed of a fixed arm 410 and a movable arm 420 mounted on a switching mechanism 440 as in the form of the movable arm 320 and switching mechanism 430 shown in Fig. 8. The fixed arm 410 has a base portion 411 formed with a mounting hole 411a for connection to one end of the power transport line L, an inclined leg portion 412 extending downward from the base portion 411, a horizontal support portion 413 integral with the leg portion 412, a pair of spaced parallel horizontal portions 411b, a pair of curved portions 411c extending downward from the parallel horizontal portions 411b and a pair of horizontal support portions 411d integral with the curved portions 411c and being spaced from the horizontal support portion 413 in a predetermined distance. In the fixed arm 410, a first fixed contact 414 is fixedly mounted on the horizontal support portion 413, while a second fixed contact 415 is fixedly mounted on the pair of horizontal support portions 411d. The same PTC element 415a as the PTC element 315a is secured to the second fixed contact 415. The movable arm 420 is substantially the same in construction as the movable arm 320 shown in Fig. 8.

Similarly to the switching mechanism 340 shown in Fig. 8, the switching mechanism 440 is constructed to normally bias the movable arm 420 toward the fixed arm 410 for maintaining first and second movable contacts 425 and 426 in engagement with the fixed contacts 414 and 415 in a normal condition of the electric power system and to move the movable arm 420 upward when applied with a detection signal from the overload current detection device.

During the assembly process of the circuit breaker 400, the fixed arm 410 is mounted on the stationary structure and arranged below the movable arm 420 mounted on the switching mechanism 340. The fixed arm 411 is connected at its mounting hole 411a to one end of the power transport line L located at one side of the power source 100, while the movable arm 420 is connected at its terminal 421a to the other end of the power transport line L located at one side of the load equipment 200. Thereafter, the movable arm 420 is moved toward the fixed arm 410 by operation of the switching mechanism 440 and is retained in position to maintain the movable contacts 425 and 426 in engagement with the fixed contacts 414 and 415.

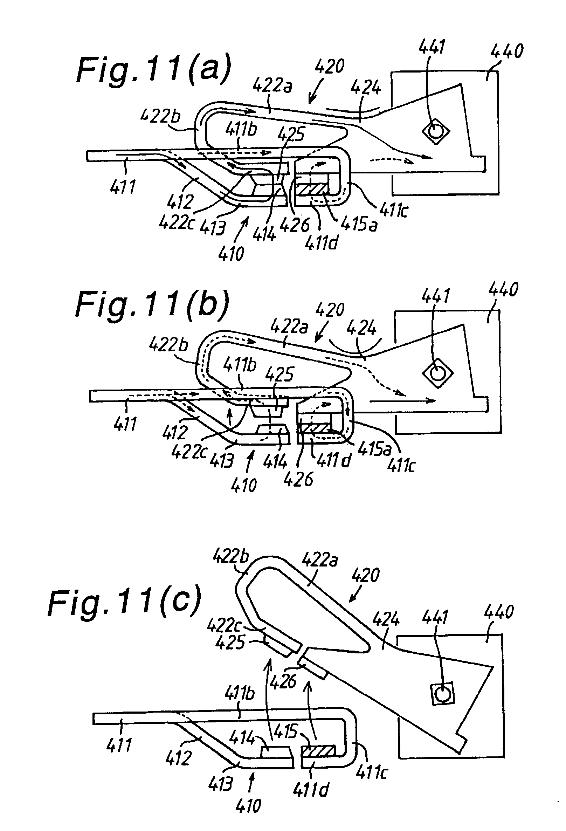

When the rated current is supplied from the power source 100 to the load equipment 200 through the power transport line L, the current flows through a first current flow path formed by the fixed contact 414 and the movable contact 425, first arm portion 422, body portion 421 and terminal 421a of movable arm 420 as shown by a solid arrow in Fig. 11(a). In this instance, the current flows in an opposite direction at the horizontal support portion 413 of fixed arm 411 and the horizontal support section 422c of movable arm 420. This causes an electromagnetic repulsion force between the horizontal support portion 413 of fixed arm 411 and the horizontal support section 422c of movable arm 420. The electromagnetic repulsion force caused by the current is, however, maintained in a smaller value than the resilient force of bifurcated portion 424 of movable arm 420. Thus, the movable contacts 425 and 426 of movable arm 420 are maintained in engagement with the fixed contacts 414 and 415 of fixed arm 411. On the other hand, the current flows through a second current flow path formed by the PTC element 415a, fixed contact 415, the movable contact 426 and body portion 421 of movable arm 420 as shown by a dotted arrow in Fig. 11(a) and is restricted by the resistance of PTC element 415a so that the current is supplied to the load equipment 200 mainly through the first current flow path.

In the occurrence of a short-circuit at the point X shown in Fig. 7, a short-circuit current causes the electromagnetic repulsion force to increase larger than the resilient force of bifurcated portion 424 of movable arm 420, and in turn, the movable arm 420 is moved by the electromagnetic repulsion force to disengage the movable contact 425 from the fixed contact 414 as shown in Fig. 11(b). Upon disengagement of the movable contact 425 from the fixed contact 414, the resistance between the contacts 414 and 425 increases to occur arc between the contacts 414 and 425. Thus, the short-circuit current flows through the second current flow path as shown in Fig. 11(b), and the PTC element 415a is applied with joule heat caused by the short-circuit current. When the temperature of PTC element 415a is raised above 130°C, the specific resistance of PTC element 415a is abruptly increased to limit the short-circuit current, and the arc between the contacts 414 and 425 is eliminated. In such an instance, the short-circuit current is detected by the overcurrent detection device, and the switching mechanism 440 is operated in response to a detection signal applied from the overcurrent detection device to move the movable arm 420 upward as shown in Fig. 11(c). As a result, the movable contact 426 is disengaged from the fixed contact 415 to interrupt the short-circuit current applied to the load equipment 200. This is useful to restrain the temperature rise of PTC element 415a.

Although in the foregoing circuit breaker 300, the bifurcated portion 324 formed of resilient copper or stainless steel is integrally formed with the body portion 321 of movable arm 320 to support the first arm portion 322, the bifurcated portion 324 of movable arm 320 may be modified as illustrated in Figs. 12(a) and 12(b). In the movable arm 320 illustrated in Fig. 12(a), the first arm portion 322 is provided separately from the body portion 321 of movable arm 320 and connected to the body portion 321 by means of a leaf spring 350 secured thereto by welding. In this modification, the resiliency of leaf spring 350 is determined to be larger than the electromagnetic repulsion force caused by the rated current less than the breaking capacity flowing through the first current flow path shown by the solid arrow in Fig. 9(a). Thus, the first arm portion 322 of movable arm 320 is moved upward against the biasing force of leaf spring 350 when applied with the electromagnetic repulsion force caused by a short-circuit current in the event of a short-circuit on the power transport line L.

In the movable arm 320 illustrated in Fig. 12(b), the first arm portion 322 is provided separately from the body portion 321 of movable arm 320 and connected to the body portion 321 by means of a coil spring 360 secured thereto. In this modification, the resiliency of coil spring 360 is determined to be larger than the electromagnetic repulsion force caused by the rated current less than the breaking capacity flowing through the first current flow path shown by the solid arrow in Fig. 9(a). Thus, the first arm portion 322 of movable arm 320 is moved upward against the biasing force of coil spring 360 when applied with the electromagnetic repulsion force caused by a short-circuit current in the event of a short-circuit on the power transport line L.

## Claims

1. A current limiter composed of a PTC element the resistance of which is abruptly increased by rise of temperature above a resistance transition temperature and a pair of electrode plates secured to opposite surfaces of the PTC element, wherein the PTC element is formed in a structure in which density of an overcurrent flowing across an outer peripheral portion thereof becomes larger than that of the overcurrent flowing across a central portion thereof.

2. A current limiter as claimed in Claim 1, wherein said PTC element is formed thinner at its outer peripheral portion than at its central portion.

3. A current limiter as claimed in Claim 1, wherein said PTC element is thickened from its outer peripheral portion toward its central portion.

4. A current limiter as claimed in Claim 1, wherein said PTC element is formed in a structure in which the resistivity at its central portion becomes larger than that at its outer peripheral portion.

5. A current limiter as claimed in Claim 1, wherein said PTC element is formed in a structure in which the contact area with one of said electrode plates becomes smaller at its central portion than at its outer peripheral portion.

6. A current limiter composed of a PTC element the resistance of which is abruptly increased by rise of temperature above a resistance transition temperature and a pair of electrode plates secured to opposite surfaces of the PTC element, wherein a normally closed switch is connected in parallel with said PTC element to be rapidly opened when applied with an overcurrent.

7. A current limiter as claimed in Claim 6, wherein said normally closed switch is opened by an electromagnetic repulsion force caused by an overcurrent applied thereto, while said PTC element is applied with joule heat caused by the overcurrent so that the resistance of said PTC element is abruptly increased to limit the overcurrent.

8. A circuit breaker in combination with a current limiter provided with a PTC element the resistance of which is abruptly increased by rise of temperature thereof above a resistance transition temperature to limit a short-circuit current in the event of a short-circuit, wherein the circuit breaker comprises a first normally closed switch connected in parallel with said PTC element to be rapidly opened when applied with the short circuit-current and a second normally closed switch associated with said PTC element to be opened when the short-circuit is detected.

9. A circuit breaker as claimed in Claim 8, wherein said first normally closed switch is opened by an electromagnetic repulsion force caused by the short-circuit current applied thereto, while said second normally closed switch is opened when the resistance of said PTC element is abruptly increased by rise of temperature above the resistance transition temperature to limit the short-circuit current.

10. A circuit breaker in combination with a current limiter provided with a PTC element the resistance of which is abruptly increased by rise of temperature above a resistance transition temperature to limit a short-circuit current in the event of a short circuit in an electric power system,
wherein the circuit breaker comprises:
a fixed arm mounted on a stationary structure;
a movable arm mounted on a switching mechanism and placed to be opposed to said fixed arm in a normal condition of the electric power system and to be moved away from said fixed arm when the short-circuit is detected;
first and second fixed contacts spaced in a predetermined distance and mounted on said fixed arm for connection to a source of electric power, said second fixed contact being associated with the PTC element;
first and second movable contacts spaced in a predetermined distance and carried by said movable arm for connection to a load equipment, said first and second movable contacts being normally maintained in engagement with said first and second fixed contacts under the load of a resilient portion of said movable arm; and
wherein said first movable contact is disengaged from said first fixed contact when applied with an electromagnetic repulsion force caused by the short-circuit current applied thereto , while said movable arm is moved away from said fixed arm by operation of said switching mechanism when the resistance of said PTC element is abruptly increased by rise of temperature above the resistance transition temperature to limit the short-circuit current.

11. A circuit breaker in combination with a current limiter as claimed in Claim 10, wherein the load of the resilient portion of said movable arm is determined to be larger than a magnetic repulsion force caused by a normal current flowing across said first fixed and movable contacts so that the resilient portion of said movable arm is flexed by a magnetic repulsion force caused by the short-circuit current flowing across said first fixed and movable contacts in the event of the short-circuit.

12. A circuit breaker in combination with a current limiter as claimed in Claim 11, wherein the electromagnetic repulsion force is caused by the current flowing said fixed arm in an opposite direction relative to the current flowing through said movabl arm.
